# EUROPÄISCHE PATENTANMELDUNG

(11) **EP 2 384 846 A2**
(43) Veröffentlichungstag der Anmeldung: **09.11.2011**
(21) Anmeldenummer: 11163892.0
(22) Anmeldetag: 27.04.2011
(51) Int. Cl.: B23K 37/04, B23K 26/42, B23K 9/32

(54) **Auflage für eine Werkstoffplatte**

(30) Priorität: 05.05.2010 DE 102010028606
(71) Anmelder: Blechbearbeitung Hocker GmbH + Co. KG, 70734 Fellbach (DE)
(72) Erfinder:
(74) Vertreter: Herzog, Markus

(57) **Zusammenfassung**

Auflage (10) für eine Werkstoffplatte (26), umfassend einen Rahmen (12, 112) mit einer Mehrzahl von Trägern (18, 118) und einer Mehrzahl von Stützelementen (24) auf jedem Träger (18, 118), wobei die Stützelemente (24) Auflageabschnitte (40) aufweisen, die bei Aufliegen von Werkstoffplatten (26) auf der Auflage (10) in einer Stützrichtung (H) unmittelbar an den Werkstoffplatten (26) anliegen, wobei die Stützelemente (24) aus einem Material sind, das weicher ist als das Material der Träger (18, 118).

## Beschreibung

Die Erfindung betrifft eine Auflage für eine Werkstoffplatte, umfassend einen Rahmen mit einer Mehrzahl von Trägern und einer Mehrzahl von Stützelementen auf jedem Träger, wobei die Stützelemente Auflageabschnitte aufweisen, die bei Aufliegen von Werkstoffplatten auf der Auflage in einer Stützrichtung unmittelbar an den Werkstoffplatten anliegen.

Obwohl die Erfindung im Folgenden hauptsächlich am Beispiel einer Auflage einer Laser-Schneidvorrichtung erläutert werden wird, sei bereits an dieser Stelle darauf hingewiesen, dass die Erfindung mit Vorteil auch bei anderen Arten von Vorrichtungen eingesetzt werden kann, die zur Bearbeitung ebener Werkstücke verwendet werden. Im Bereich der zum Schneiden von Werkstoffplatten vorgesehenen Vorrichtungen kann die Erfindung grundsätzlich beispielsweise auch in Plasma-Schneidvorrichtungen und Brenn-Schneidvorrichtung zum Einsatz kommen.

Auflagen der eingangs genannten Art sind aus dem Stand der Technik bereits bekannt. Sie dienen als Auflagen für Werkstoffplatten in Vorrichtungen zur Bearbeitung von Werkstoffplatten. Solche Auflagen kommen zum Beispiel in den Laser-Schneidvorrichtungen Trumatic L 2530 und L 3030 der Firma Trumpf zur Anwendung. Diese Vorrichtungen werden zum Schneiden von Metallplatten verwendet und umfassen horizontal ausgerichtete Flachbett-Auflagen, die einen Rahmen, eine Mehrzahl von in diesem Rahmen gehaltenen Trägern sowie Stützelemente, die einstückig mit den Trägern verbunden sind, umfassen. Die Stützelemente weisen Auflageabschnitte auf, die üblicherweise alle in derselben horizontalen Ebene liegen und auf denen die Werkstoffplatten zur Bearbeitung unmittelbar aufliegen können. Die Stützelemente sind in einer Querrichtung der Träger periodisch entlang der Träger angeordnet, wobei jeweils benachbarte Stützelemente gleichen Abstand voneinander aufweisen. Die zwischen benachbarten Stützelementen liegenden Abschnitte der Träger sind als Vertiefungen ausgebildet, in denen sich während der Bearbeitung der Werkstoffplatten Werkstoffpartikel unterschiedlicher Größe in fester oder flüssiger Form sammeln und absetzen können, die bei der Bearbeitung von der Werkstoffplatte abgetragen worden sind. Das Entfernen solcher Ablagerungen kann umständlich beziehungsweise nicht möglich sein. Während der Nutzungsdauer von Trägern und Stützelemente nehmen die Ablagerungen und die damit verbundenen Beeinträchtigungen des ordnungsgemäßen Betriebs der Werkstoffbearbeitungsvorrichtung zu.

Die bekannten Auflagen sind aus Stahl gefertigt, um über eine ausreichende Stabilität zu verfügen, welche ein Durchhängen der Werkstoffplatte verhindert und deren Planarität während der Bearbeitung sicherstellt. Es hat sich jedoch in der Praxis gezeigt, dass die Werkstoffplatten durch den Kontakt mit den Stützelementen leicht verkratzt werden oder andere Zeichen mechanischer Einwirkung aufweisen können. Dieses Problem tritt beispielsweise bei Aluminiumblechen und Edelstahlblechen in besonderem Maße auf.

Es ist daher Aufgabe der Erfindung, eine Auflage der eingangs genannten Art anzugeben, bei der derartige Beschädigungen an den aufliegenden Werkstoffplatten nicht oder zumindest nur in vermindertem Maße auftreten.

Diese Aufgabe wird erfindungsgemäß durch eine Auflage der eingangs genannten Art gelöst, bei welcher die Stützelemente aus einem Material sind, das weicher ist als das Material der Träger. Auf diese Weise können insbesondere bezüglich der Stabilität der Auflage vorteilhafte Materialeigenschaften eines steifen, für die Träger zu bevorzugenden Materials, wie etwa eines Stahls, mit für die Auflageabschnitte bzw. Stützelemente vorteilhaften Eigenschaften eines weicheren Materials, wie etwa Kupfer, kombiniert werden.

Die bekannten Auflagen haben Auflageabschnitte, die scharfe rechte Winkel bildende Kanten aufweisen. Es hat sich gezeigt, dass die Werkstoffplatten durch den Kontakt mit diesen Kanten leicht verkratzt werden oder andere Zeichen mechanischer Einwirkung erhalten können. In Weiterbildung der Erfindung wird daher vorgeschlagen, dass die Auflageabschnitte als abgeflachte Spitzen ausgebildet sein können. Auf diese Weise können Beschädigungen von Plattenoberflächen durch unstetige Oberflächenverläufe weiter reduziert werden.

Die Plattenoberfläche kann im Bearbeitungsprozess nicht nur durch eine mechanische Einwirkung der Auflage, sondern auch durch Anlagerung von abgetrennten Werkstoffpartikein, wie zum Beispiel Metallspritzern, beeinträchtigt werden. Ein weiterer Vorteil von als abgeflachte Spitzen ausgebildeten Auflageabschnitte liegt darin, dass die Verschmutzung von aufliegenden Werkstoffplatten durch bei der Bearbeitung abgetragene Werkstoffpartikel dadurch verringert werden kann, dass die Auflageabschnitte erfindungsgemäß im Vergleich zu den bekannten Auflageflächen als Spitze verkleinert ausgebildet sind, so dass sich weniger Werkstoffpartikel an den Auflageabschnitten sammeln und von diesen auf die Platten gelangen können.

Es wird ferner vorgeschlagen, dass zumindest die Auflageabschnitte der Stützelemente, vorzugsweise die Stützelemente insgesamt, aus Kupfer gefertigt sein können. Es wurde vorstehend bereits erwähnt, dass Kupfer aufgrund seiner Weichheit besonders wenige Beschädigungen bzw. sonstige mechanische Spuren an den aufliegenden Werkstoffplatten hervorruft, und dies selbst dann, wenn die Werkstoffplatten Aluminiumbleche sind. Ein weiterer Vorteil, der durch den Einsatz von aus Kupfer gefertigten Stützelementen erzielt werden kann, besteht darin, dass solche Stützelemente mit relativ geringem Zeit- und Kostenaufwand durch Stanzen hergestellt werden können. Beim Einsatz der Auflage in einer Laser-Schneidvorrichtung mit einem Kohlendioxid-Laser kann ferner eine möglicherweise gefährdend oder destabilisierend wirkende Erhitzung der Auflageabschnitte vermieden werden, da Kupfer elektromagnetische Strahlung im Wellenlängenbereich von Kohlendioxid-Lasern im Wesentlichen reflektiert. Grundsätzlich eignen sich in dieser Hinsicht auch andere Materialien, die ein ähnliches Reflexionsvermögen aufweisen, beispielsweise Aluminium, Zink, Silber und Gold.

In Weiterbildung der Erfindung wird vorgeschlagen, dass die Stützelemente im Wesentlichen plattenförmig ausgebildet sein können, wobei die Plattenebene in dem auf dem zugeordneten Träger angeordneten Zustand zur Querrichtung dieses Trägers im Wesentlichen orthogonal verlaufen kann. Hierdurch kann erreicht werden, dass die Stützelemente mit geringem Zeit-und Kostenaufwand aus Blech gestanzt werden können. Grundsätzlich sind jedoch beliebig geformte Stützelemente denkbar, beispielsweise im Wesentlichen stabförmige oder im Wesentlichen kegelförmige Stützelemente.

Ferner wird vorgeschlagen, dass Träger und Stützelemente als gesonderte Bauteile ausgebildet sein können. Auf diese Weise brauchen die Träger dann, wenn ein Auswechseln von Stützelementen erforderlich wird, nicht, wie bei den bekannten einstückig mit den Stützelementen ausgebildeten Trägern, ebenfalls ausgewechselt zu werden. Und umgekehrt können bei Austausch eines Trägers die darauf angeordneten Stützelemente weiterverwendet werden. Dies ermöglicht eine Verringerung der Betriebskosten.

Ferner wird vorgeschlagen, dass die Stützelemente in dem auf dem zugeordneten Träger angeordneten Zustand relativ zu diesem Träger höchstens in Stützrichtung beweglich sein können. Hierdurch kann gewährleistet werden, dass Werkstoffplatten stabil und ohne Relativbewegung zu den Trägern auf diesen aufliegen und dadurch fehler- und beschädigungsfrei bearbeitet werden können.

Wie vorstehend bereits erwähnt können die Auflageabschnitte, vorzugsweise alle Auflageabschnitte, in ein und derselben Auflageabschnitte-Ebene liegen. Dadurch kann zum Beispiel eine ebene Werkstoffplatte bei horizontaler Ausrichtung der Auflageabschnitte-Ebene ohne zusätzliche Haltevorrichtung für die Werkstoffplatte gelagert werden. Die Erfindung ist jedoch auf Auflagen mit räumlich beliebig ausgerichteter Rahmen-Ebene gerichtet. Denkbar sind auch Auflagen, die Vorrichtungen zum Befestigen von Werkstoffplatten vorsehen. Denkbar ist ebenfalls eine Ausführungsform, in der nicht alle Auflageabschnitte in derselben Ebene liegen, sowie eine Ausführungsform, in der Stützelemente um einen Betrag in Stützrichtung bewegt werden können, der für jedes derart bewegbare Stützelement individuell bestimmt und eingestellt werden kann. Eine solche Ausführungsform ist zum Beispiel denkbar für den Einsatz zur Bearbeitung von Werkstoffplatten inhomogener Flächenmasseverteilung. Um ein ebenes Anliegen einer solchen Platte zu erzielen, kann es je nach Art der Stützelemente erforderlich sein, die Auflageabschnitte nach Herstellen des Anlage-Zustands einzeln in Stützrichtung neu zu positionieren. Eine solche Ausführungsform ist auch für die Bearbeitung von Werkstoffplatten unterschiedlicher Dicke denkbar.

Um ein schnelles und einfaches Austauschen von Stützelementen ohne Hilfsmittel zu ermöglichen, ist es vorteilhaft, wenn die Stützelemente auf den jeweils zugeordneten Träger aufsteckbar ausgebildet sind. Die bekannten Träger sind von der Seite, an der die Werkstoffplatten anliegen, also in Stützrichtung, am besten zugänglich, so dass das Aufstecken der Stützelemente vorzugsweise in Stützrichtung möglich sein kann.

In Weiterbildung der Erfindung wird vorgeschlagen, dass sowohl das Stützelement als auch der Träger eine Aufsteckvertiefung aufweisen können, wobei Stützelement und Träger beim Aufstecken wechselseitig nach Art der Blockhaus-Bauweise in die Aufsteckvertiefung des jeweils anderen Teils einführbar sind. Diese Ausführung der Steckverbindung gewährleistet ein stabiles Anliegen von Platten an der Auflage dadurch, dass zum einen seitliche Begrenzungsflächen der Stützelemente sich an dem Träger, auf dem sie angeordnet sind, in einer ersten Richtung abstützen können, die zur Aufsteckrichtung im Wesentlichen orthogonal verläuft, und zum anderen Begrenzungsflächen des Trägers sich an den auf dem Träger angeordneten Stützelementen in einer zweiten Richtung abstützen können, die sowohl zur Aufsteckrichtung als auch zur ersten Richtung im Wesentlichen orthogonal verläuft, so dass die Stützelemente unter dem Druck der aufliegenden Werkstoffplatte nicht wegkippen können. Darüber hinaus kann durch eine Steckverbindung nach Art der Blockhaus-Bauweise auch verhindert werden, dass die Stützelemente sich unter dem Druck der aufliegenden Werkstoffplatte weiter in Aufsteckrichtung bewegen.

Weiterhin ist es vorteilhaft, wenn benachbarte Stützelemente in einer zur Stützrichtung orthogonal verlaufenden Richtung einen vorbestimmten Mindestabstand voneinander aufweisen, der vorzugsweise wenigstens 1 cm, noch bevorzugter wenigstens 2 cm, beträgt. Damit kann erreicht werden, dass sich abgetragene Werkstoffpartikel bevorzugt zwischen den Stützelementen statt an bzw. auf diesen ablagern, so dass die Nutzungsdauer der Stützelemente verlängert werden kann. Ein weiterer Vorteil eines solchen Mindestabstands ist, dass dadurch die Zahl der verwendeten Stützelemente und damit die Materialkosten beschränkt werden.

Um die Verschmutzung der Stützelemente und insbesondere der Auflageabschnitte reduzieren zu können, ist es ferner vorteilhaft, wenn die Stützelemente sich zu den Auflageabschnitten hin verjüngend ausgebildet sind. Hierdurch können in flüssiger Form an die Auflageabschnitte gelangte Werkstoffe besser abperlen und feste Werkstoffpartikel leichter von den Auflageabschnitten abrutschen.

Es ist weiterhin von Vorteil, wenn die Auflageabschnitte der Stützelemente von einer oberen Begrenzungsfläche des jeweils zugeordneten Trägers in Stützrichtung einen vorbestimmten Mindestabstand aufweisen. Dadurch kann erreicht werden, dass die Anzahl der von der Auflage an eine anliegende Platte zurückspringenden Werkstoffpartikel reduziert wird, so dass Platten bei der Bearbeitung weniger verschmutzt werden.

Die Auflageabschnitte der bekannten Stützelemente weisen in Stützrichtung keinen Abstand von einer oberen Begrenzungsfläche des jeweils zugeordneten Trägers auf, da diese Auflageabschnitte in derselben zur Stützrichtung orthogonal ausgerichteten Ebene liegen wie die obere Begrenzungsfläche des jeweils zugeordneten Trägers. Die Auflageabschnitte sind in der vorliegenden Erfindung demgegenüber erhöht ausgebildet, so dass die Stützelemente weniger verschmutzen, da mehr Raum für von den Stützelementen herabperlende bzw. -rutschende Werkstoffpartikel in den Vertiefungen bereitsteht. Somit dauert es länger, bis die Vertiefungen so verschmutzt sind, dass dieser Sammelungsmechanismus nicht mehr funktioniert.

Weiterhin wird durch den Mindestabstand die Anzahl der von der Auflage an ein Stützelement zurückgeworfenen Werkstoffpartikel reduziert, so dass die Nutzungsdauer der Stützelemente verlängert werden kann.

Ferner ist es vorteilhaft, wenn die Träger mit in ihrer jeweiligen Querrichtung, vorzugsweise periodisch, angeordneten Vertiefungen ausgebildet sind. Hierdurch kann erreicht werden, dass sich abgetragene Werkstoffpartikel in den Vertiefungen statt an den Auflageabschnitten sammeln können, so dass die Auflageabschnitte nicht verunreinigt werden. Die Vertiefungen sind vorzugsweise zwischen den Positionen, an denen die Stützelemente angeordnet sind, ausgebildet. Sie sind darüber hinaus vorzugsweise in einer oder von einer oberen Begrenzungsfläche der Träger ausgehend ausgebildet.

Damit die Träger von dem Rahmen der Auflage gehalten werden können, kann der Rahmen für jeden Träger Halterungen aufweisen, mit denen Endabschnitte der Träger in Eingriff bringbar sind.

Ferner kann die Auflage eine Auflage einer Vorrichtung zur Werkstoffbearbeitung sein, insbesondere eine Auflage einer Vorrichtung zum Schneiden von Werkstoffplatten. Diese Vorrichtung kann beispielsweise eine Laser-Schneidvorrichtung sein. Grundsätzlich sind aber auch Plasma- oder Brenn-Schneidvorrichtungen denkbar. In Weiterbildung dessen kann die Vorrichtung zur Werkstoffbearbeitung zum Bearbeiten von Metallplatten konfiguriert sein.

Die Erfindung wird im Folgenden an einem Ausführungsbeispiel anhand der beigefügten Zeichnungen näher erläutert werden. Es zeigt:
- Figur 1: eine schematische Ansicht der erfindungsgemäßen Auflage und eines Teils einer Laserführungsvorrichtung der erfindungsgemäßen Auflage;
- Figur 2: in Seitenansicht einen Teil einer ersten Ausführungsform eines Trägers der erfindungsgemäßen Auflage;
- Figur 3: ein Stützelement der erfindungsgemäßen Auflage;
- Figur 4: in Seitenansicht einen Teil einer zweiten Ausführungsform eines Trägers der erfindungsgemäßen Auflage;

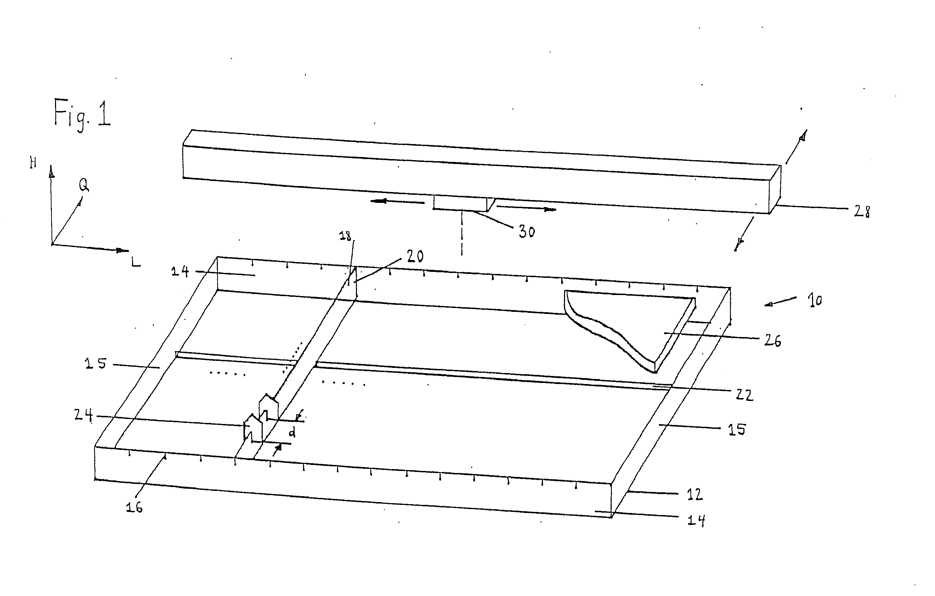

In Figur 1 ist die erfindungsgemäße Auflage mit 10 bezeichnet. Die Auflage 10 umfasst einen Rahmen 12, der eine rechteckige Grundform hat. In zwei gegenüberliegenden Seiten 14 des Rahmens 12 sind in regelmäßigen Abständen in deren Längsrichtung L Ausnehmungen bzw. Einschnitte 16 vorgesehen, die als Halterungen für Träger 18 dienen, wobei die Träger 18 jeweils mit ihren gegenüberliegen Endabschnitten 20 in die Ausnehmungen 16 eingehängt und dadurch vom Rahmen 12 gehalten werden können. In Figur 1 ist der besseren Übersichtlichkeit halber nur ein Träger 18 dargestellt. Die Punkte in Längsrichtung L deuten an, dass weitere derartige Träger 18 vorhanden sind.

Falls der Abstand zwischen den Seiten 14 des Rahmens 12 zu groß ist, können ferner ein oder mehrere sich in Längsrichtung L erstreckende Querträger 22 vorgesehen sein, auf denen die Träger 18 ebenfalls aufliegen. Die Querträger 22 sind mit dem anderen Paar gegenüberliegender Seiten 15 des Rahmens 12 verbunden. Rahmen 12, Träger 18 und Querträger 22 sind vorzugsweise aus Stahl gefertigt.

Auf jedem Träger 18 sind in regelmäßigen Abständen in Querrichtung Q Stützelemente 24 aufgesteckt. In Figur 1 sind der besseren Übersichtlichkeit halber nur zwei Stützelemente 24 dargestellt. Die Punkte in Querrichtung Q deuten an, dass weitere Stützelemente 24 vorhanden sein können. Weiterhin ist in Figur 1 ein Teil einer Werkstoffplatte 26 dargestellt, die auf den Stützelementen 24 aufliegt, was in Figur 1 aber der Übersichtlichkeit halber nicht gezeigt ist. Entlang eines Trägers 18 benachbarte Stützelemente 24 weisen in Querrichtung Q einen Abstand d voneinander auf, der vorzugsweise wenigstens 3,5 cm beträgt.

Figur 1 zeigt eine Auflage 10, die in einer Laser-Schneidvorrichtung zum Schneiden von Metallplatten eingesetzt wird. Dargestellt ist auch ein Teil 28 einer X-Y- bzw. L-Q-Verstellvorrichtung der Laser-Schneidvorrichtung. Wie in Figur 1 durch zwei Pfeile angedeutet ist, ist der Teil 28 in Querrichtung Q verfahrbar ausgebildet. An ihm ist ein Strahlaustrittsabschnitt 30 der Laser-Schneidvorrichtung in Längsrichtung L verfahrbar angeordnet, was in Figur 1 wiederum durch zwei Pfeile angedeutet ist. Auf diese Weise kann der Strahlaustrittsabschnitt 30 in einer Ebene, die parallel zu der durch den Rahmen 12 definierten Ebene verläuft, beliebig positioniert werden, also in Längsrichtung L und in Querrichtung Q. Aus dem Strahlaustrittsabschnitt 30 kann ein Laserstrahl zur Werkstoffplatte 26 hin austreten, um diese zu schneiden.

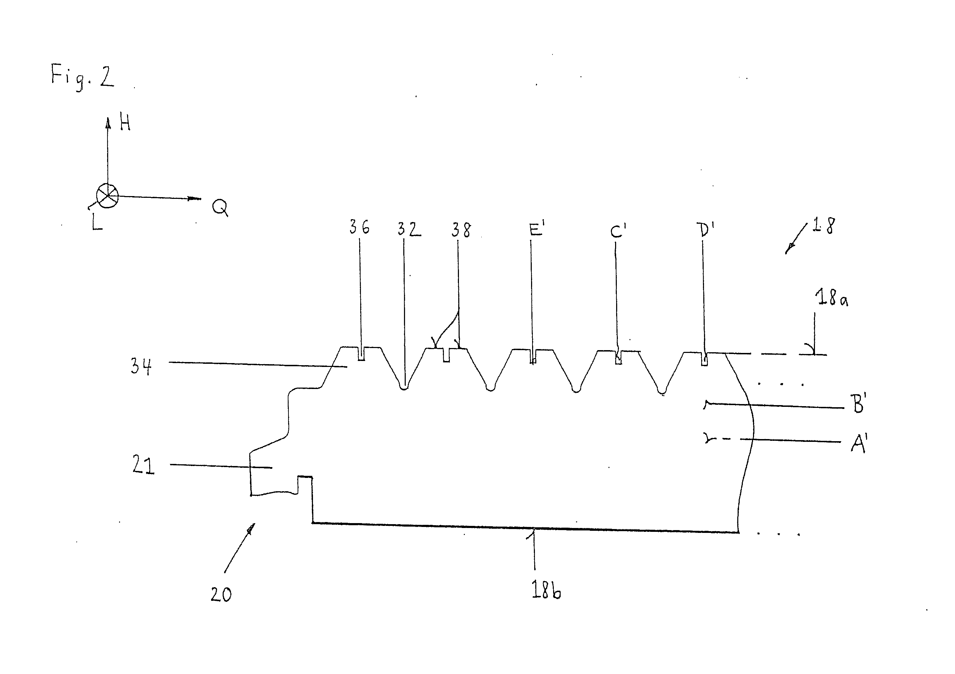

Figur 2 zeigt einen Teil einer ersten Ausführungsform eines Trägers 18 der erfindungsgemäßen Auflage 10. Dargestellt ist lediglich einer der beiden Endabschnitte 20 des Trägers 18. Beide Endabschnitte 20 weisen jeweils einen Haken 21 auf, mit denen der Träger 18 in Ausnehmungen 16 des Rahmens 12 eingehängt werden kann.

Von einer oberen Begrenzungsfläche 18a des Trägers 18 gehen Vertiefungen 32 aus, die in Querrichtung Q des Trägers 18 in regelmäßigen Abständen zwischen dessen beiden Endabschnitten 20 vorgesehen sind. Zwischen jedem Paar benachbarter Vertiefungen 32 ist ein Aufsteckabschnitt 34 mit einer Aufsteckvertiefung 36 und dieser benachbarten Auflageflächen 38 vorgesehen. Die Auflageflächen 38 sind Teil der oberen Begrenzungsfläche 18a des Trägers 18.

Die Aufsteckvertiefungen 36 ermöglichen das Aufstecken von Stützelementen 24 auf den Träger 18 durch Einführen der Stützelemente 24 in die Aufsteckvertiefungen 36. Hierauf wird weiter unten noch näher eingegangen werden.

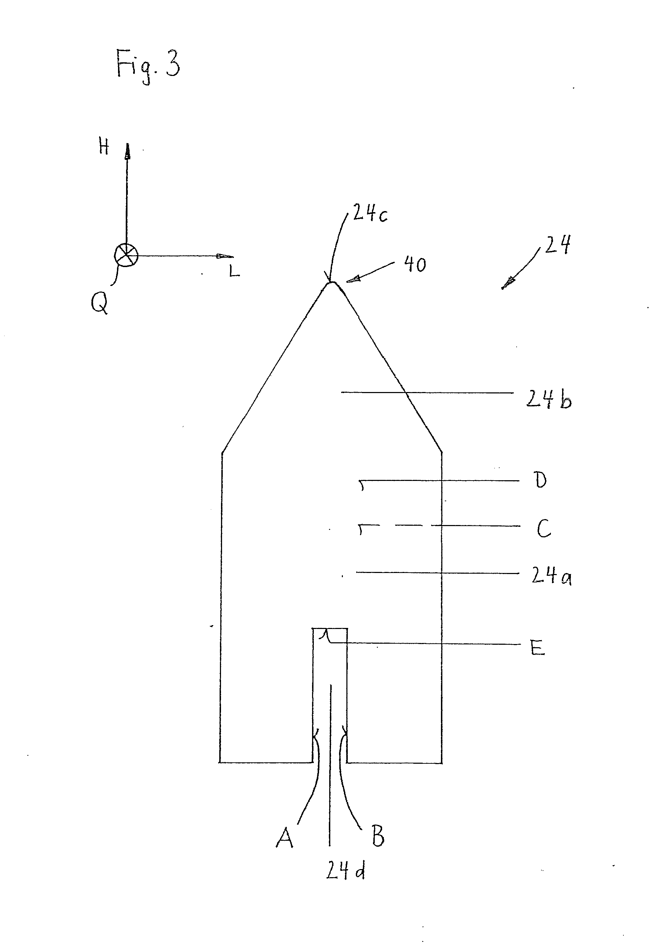

In Figur 3 ist ein Stützelement 24 der erfindungsgemäßen Auflage 10 dargestellt. Die Stützelemente 24 sind als gesonderte Bauteile gefertigt, also weder untereinander noch mit dem Träger 18 einstückig verbunden. Die Stützelemente 24 sind plattenförmig ausgebildet, wobei sich die Plattenebene in der bestimmungsgemäßen Gebrauchsorientierung orthogonal zu der Querrichtung Q erstreckt. In dem in Figur 3 dargestellten Ausführungsbeispiel umfasst das Stützelement 24 einen im Wesentlichen rechteckigen Abschnitt 24a und einen mit diesem einstückig verbundenen dreieckigen Abschnitt 24b. Die Spitze des dreieckigen Abschnitts 24b ist abgeflacht ausgebildet, um an einem Auflageabschnitt 40 eine Auflagefläche 24c für Werkstoffplatten 26 zu bilden. An der von der Auflagefläche 24c abgewandten Seite ist in dem rechteckigen Abschnitt 24a des Stützelements 24 eine Aufsteckvertiefung 24d ausgebildet, deren Abmessungen derart gewählt sind, dass sie zusammen mit einer Aufsteckvertiefung 36 des Trägers 18 eine stabile Steckverbindung ergibt.

Beim Aufstecken eines Stützelements 24 auf den Träger 18 greifen die beiden Aufsteckvertiefung 24d und 36 nach Art der Blockhaus-Bauweise ineinander, d.h. derart, dass die stirnseitige Begrenzungsfläche E der Aufsteckvertiefung 24d an der stirnseitigen Begrenzungsfläche E' (siehe Figur 2) der Aufsteckvertiefung 36 des Trägers 18 anliegt, die seitlichen Begrenzungsflächen A und B der Aufsteckvertiefung 24d an der Aufsteckvertiefung 36 des Trägers 18 benachbarten Oberflächenabschnitten A' und B' der Vorder- bzw. Rückseite des Trägers 18 anliegen, und die seitlichen Begrenzungsflächen C' und D' der Aufsteckvertiefung 36 an der Aufsteckvertiefung 24d des Stützelements 24 benachbarten Oberflächenabschnitten C und D der Vorder- bzw. Rückseite des Stützelements 24 anliegen. Durch das Zusammenwirken der Flächenpaare A/A' und B/B' kann ein Verkippen des Stützelements 24 um die Querrichtung Q verhindert werden, und durch das Zusammenwirken der Flächenpaare C/C' und D/D' ein Verkippen des Stützelements 24 um die Längsrichtung L. Das Zusammenwirken der Flächen E und E' stellt sicher, dass das Stützelement 24 nur bis zu einer vorbestimmten Lage auf den Träger 18 aufgesteckt werden kann, so dass es auch unter der Last der Werkstoffplatte 26 nicht nachgeben kann.

Die Stützelemente 24 sind zumindest in einem die Auflagefläche 24c für Werkstoffplatten 26 umfassenden Abschnitt, vorzugsweise aber vollständig, aus Kupfer oder einem anderen weichen Material gefertigt, so dass die Oberflächen der Werkstoffplatten 26 nicht zerkratzt oder anderweitig beschädigt werden. Dies ist insbesondere bei aus weichen Metallen bestehenden Werkstoffplatten wie Aluminiumblechen vorteilhaft.

Gemäß einem praktischen Ausführungsbeispiel können der Träger 18 und die Stützelemente 24 die folgenden Abmessungen aufweisen:
- Die Länge des Trägers 18 in Querrichtung Q beträgt 1640 mm.
- Die größte Höhe des Trägers 18 in Höhenrichtung H, die dem Abstand zwischen der oberen Begrenzungsfläche 18a und einer zu dieser parallelen unteren Begrenzungsfläche 18b des Trägers 18 entspricht, beträgt 82,79 mm.

Die Träger 18 sind also im Wesentlichen als schmale lange Platten ausgebildet und haben in Längsrichtung L ihre kleinste Breite und in Querrichtung Q ihre größte Länge.
- Der kleinste Abstand der Innenflächen A und B der Aufsteckvertiefung 24d des Stützelements 24 beträgt 2,5 mm.
- Die Länge der in Höhenrichtung H verlaufenden Kanten des rechteckigen Abschnitts 24a des Stützelements 24 beträgt 20,81 mm.
- Die Länge der in Längsrichtung L verlaufenden Kanten des rechteckigen Abschnitts 24a des Stützelements 24 beträgt 15 mm.
- Die Höhe des Stützelements 24 in Höhenrichtung H beträgt 32,81 mm.
- Die Auflageabschnitte 40 der Stützelemente 24 weisen von der oberen Begrenzungsfläche 18a des Trägers 18, auf dem sie angeordnet sind, in Stützrichtung (Höhenrichtung H) einen Abstand von mindestens 1,3 cm auf.
- Der kleinste Abstand der Innenflächen C' und D' der Aufsteckvertiefung 36 des Trägers 18 beträgt 2,5 mm.
- Die Tiefe der Aufsteckvertiefungen 36 des Trägers 18 beträgt 6 mm.
- Der Abstand von einander entsprechenden Innenflächen (zum Beispiel der Innenflächen D') benachbarter Aufsteckvertiefungen 36 beträgt 38 mm.
- Die größte Breite der Vertiefungen 32 und der kleinste Abstand der Auflageflächen 38 benachbarter Aufsteckabschnitte 34 betragen jeweils 20,21 mm.

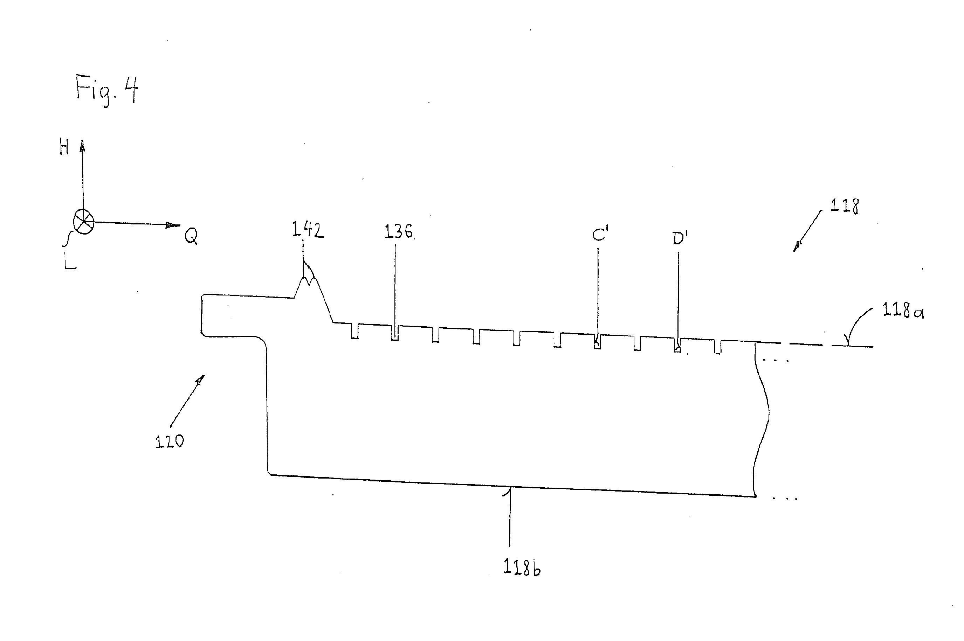

Figur 4 zeigt einen Teil einer zweiten Ausführungsform eines Trägers der erfindungsgemäßen Auflage. Diese Ausführungsform entspricht in weiten Teilen der ersten Ausführungsform des Trägers 18 (siehe Figur 2). In Figur 4 sind daher analoge Teile mit gleichen Bezugszeichen versehen wie in den Figuren 1 und 2, jedoch vermehrt um die Zahl 100. Darüber hinaus wird die Ausführungsform gemäß Figur 4 im Folgenden nur insoweit beschrieben werden, als sie sich von der Ausführungsform gemäß Figur 2 unterscheidet, auf deren Beschreibung ansonsten hiermit verwiesen sei.

Dargestellt ist lediglich einer der beiden Endabschnitte 120 des Trägers 118. Beide Endabschnitte 120 erstrecken sich im Wesentlichen in Querrichtung (Q) und sind in Ausnehmungen 116 des Rahmens 112 einführbar, so dass der Träger 118 durch die Endabschnitte 120 von dem Rahmen 112 gehalten werden kann.

Die zweite Ausführungsform des Träger 118 unterscheidet sich von der ersten Ausführungsform des Trägers 18 (siehe Figur 2) insbesondere dadurch, dass eine obere Begrenzungsfläche 118a zwischen allen Paaren benachbarter Aufsteckvertiefungen 136 frei von Vertiefungen ausgebildet ist. Der Träger 118 weist also keine zu den Vertiefungen 32 (Figur 2) analogen Vertiefungen auf. Ferner ist an jedem Ende des Trägers 118, dem jeweiligen Endabschnitt 120 in Querrichtung (Q) unmittelbar benachbart, zwischen diesem Endabschnitt 120 und der oberen Begrenzungsfläche 118a eine Auflageerhöhung 142 vorgesehen, die in Stützrichtung (H) sowohl gegenüber den Endabschnitten 120 als auch gegenüber der oberen Begrenzungsfläche 118a erhöht ausgebildet ist. Die Auflageerhöhungen 142 sind dazu vorgesehen, anliegende Werkstoffplatten 26 zu stützen. Die Oberkante jeder Auflageerhöhung 142 liegt daher in derselben Ebene wie die Auflageflächen 24c der Stützelemente 24, so dass die Auflageerhöhungen 142 und die Stützelemente 24 in Stützrichtung (H) auf gleicher Höhe abschließen.

Gemäß einem praktischen Ausführungsbeispiel kann der Träger 118 die folgenden Abmessungen aufweisen:
- Die Länge der Träger 118 in Querrichtung Q beträgt 1365 mm.
- Die größte Höhe der Träger 118 in Höhenrichtung H, die wegen der Auflageerhöhung 142 größer als der Abstand zwischen der oberen Begrenzungsfläche 118a und einer zu dieser parallelen unteren Begrenzungsfläche 118b des Trägers 118 ist, beträgt 82,35 mm.
- Der kleinste Abstand zwischen einer den Endabschnitt 120 in Stützrichtung H nach oben begrenzenden Kante des Endabschnitts 120 und der unteren Begrenzungsfläche 118b des Trägers 118 beträgt 74,15 mm.
- Der kleinste Abstand zwischen einer den Endabschnitt 120 in Stützrichtung H nach unten begrenzenden Kante des Endabschnitts 120 und der unteren Begrenzungsfläche 118b des Trägers 118 beträgt 57,48 mm.
- Der kleinste Abstand von Innenflächen C' und D' der Aufsteckvertiefung 136 des Trägers 118 beträgt 2,5 mm.
- Der Abstand von einander entsprechenden Innenflächen (zum Beispiel der Innenflächen D') benachbarter Aufsteckvertiefungen 136 beträgt 16 mm. Der Abschnitt des Trägers 118 zwischen zwei benachbarten Aufsteckvertiefungen 136 weist in Längsrichtung L des Trägers 118 eine Länge von 13,5 mm auf.
- Die Tiefe der Aufsteckvertiefungen 136 des Trägers 118 beträgt 6 mm.
- In den Trägern 118 sind in Stützrichtung H von der unteren Begrenzungsfläche 118b ausgehende, in Figur 4 nicht dargestellte Vertiefungen vorgesehen, mit denen die Träger 118 auf Querträgern 122 aufliegen. Die Breite dieser Vertiefungen in Querrichtung (Q) beträgt 6,5 mm, die Tiefe dieser Vertiefungen in Stützrichtung (H) beträgt 25,05 mm.

## Patentansprüche

1. Auflage (10) für eine Werkstoffplatte (26), umfassend einen Rahmen (12, 112) mit einer Mehrzahl von Trägern (18, 118) und einer Mehrzahl von Stützelementen (24) auf jedem Träger (18, 118), wobei die Stützelemente (24) Auflageabschnitte (40) aufweisen, die bei Aufliegen von Werkstoffplatten (26) auf der Auflage (10) in einer Stützrichtung (H) unmittelbar an den Werkstoffplatten (26) anliegen, **dadurch gekennzeichnet, dass** die Stützelemente (24) aus einem Material sind, das weicher ist als das Material der Träger (18, 118).

2. Auflage (10) nach einem der vorhergehenden Ansprüche,
**dadurch gekennzeichnet, dass** die Auflageabschnitte (40) als abgeflachte Spitzen ausgebildet sind.

3. Auflage (10) nach einem der vorhergehenden Ansprüche,
**dadurch gekennzeichnet, dass** zumindest die Auflageabschnitte (40) der Stützelemente (24), vorzugsweise die Stützelemente (24) insgesamt, aus Kupfer gefertigt sind.

4. Auflage (10) nach einem der vorhergehenden Ansprüche,
**dadurch gekennzeichnet, dass** die Stützelemente (24) im Wesentlichen plattenförmig ausgebildet sind, wobei die Plattenebene in dem auf dem zugeordneten Träger (18, 118) angeordneten Zustand zur Querrichtung (Q) dieses Trägers (18, 118) im Wesentlichen orthogonal verläuft.

5. Auflage (10) nach einem der vorhergehenden Ansprüche,
**dadurch gekennzeichnet, dass** Träger (18, 118) und Stützelemente (24) als gesonderte Bauteile ausgebildet sind.

6. Auflage (10) nach einem der vorhergehenden Ansprüche,
**dadurch gekennzeichnet, dass** die Stützelemente (24) in dem auf dem zugeordneten Träger (18, 118) angeordneten Zustand relativ zu diesem Träger (18, 118) höchstens in Stützrichtung (H) beweglich sind.

7. Auflage (10) nach einem der vorhergehenden Ansprüche,
**dadurch gekennzeichnet, dass** die Stützelemente (24) auf den jeweils zugeordneten Träger (18,118) aufsteckbar ausgebildet sind.

8. Auflage (10) nach einem der vorhergehenden Ansprüche,
**dadurch gekennzeichnet, dass** sowohl das Stützelement (24) als auch der Träger (18, 118) eine Aufsteckvertiefung (36, 136) aufweisen, wobei Stützelement (24) und Träger (18, 118) beim Aufstecken wechselseitig in die Aufsteckvertiefung (36, 136) des jeweils anderen Teils einführbar sind.

9. Auflage (10) nach einem der vorhergehenden Ansprüche,
**dadurch gekennzeichnet, dass** benachbarte Stützelemente (24) in einer zur Stützrichtung (H) orthogonal verlaufenden Richtung (Q) einen vorbestimmten Mindestabstand voneinander aufweisen, der vorzugsweise wenigstens 1 cm, noch bevorzugter wenigstens 2 cm, beträgt.

10. Auflage (10) nach einem der vorhergehenden Ansprüche,
**dadurch gekennzeichnet, dass** die Stützelemente (24) sich zu den Auflageabschnitten (40) hin verjüngend ausgebildet sind.

11. Auflage (10) nach einem der vorhergehenden Ansprüche,
**dadurch gekennzeichnet, dass** die Auflageabschnitte (40) der Stützelemente (24) von einer oberen Begrenzungsfläche (18a, 118a) des jeweils zugeordneten Trägers (18, 118) in Stützrichtung (H) einen vorbestimmten Mindestabstand aufweisen.

12. Auflage (10) nach einem der vorhergehenden Ansprüche,
**dadurch gekennzeichnet, dass** die Träger (18, 118) mit in ihrer jeweiligen Querrichtung (Q), vorzugsweise periodisch, angeordneten Vertiefungen (32) ausgebildet sind.

13. Auflage (10) nach einem der vorhergehenden Ansprüche,
**dadurch gekennzeichnet, dass** der Rahmen (12, 112) für jeden Träger (18, 118) Halterungen (16, 116) aufweist, mit denen Endabschnitte (20, 120) der Träger (18, 118) in Eingriff bringbar sind.

14. Auflage (10) nach einem der vorhergehenden Ansprüche,
**dadurch gekennzeichnet, dass** sie die Auflage (10) einer Vorrichtung zur Werkstoffbearbeitung ist, insbesondere die Auflage (10) einer Vorrichtung zum Schneiden von Werkstoffplatten (26).

15. Auflage (10) nach Anspruch 14,
**dadurch gekennzeichnet, dass** die Vorrichtung zur Werkstoffbearbeitung zum Bearbeiten von Metallplatten konfiguriert ist.
